# EUROPEAN PATENT SPECIFICATION

(11) **EP 3 198 976 B1**
(45) Date of publication and mention of the grant of the patent: **24.07.2019**
(21) Application number: 15791047.2
(22) Date of filing: 24.09.2015
(51) Int. Cl.: H04W 74/08, H04W 16/14, H04W 72/04

(54) **TRANSMISSION CONFIRMATION SIGNAL ON LBT CARRIER**
SENDEBESTÄTIGUNGSSIGNALS AUF EINEM LBT-TRÄGER
SIGNAL DE CONFIRMATION DE TRANSMISSION SUR SUPPORT LBT

(30) Priority: 26.09.2014 US 201462055732 P
(43) Date of publication of application: 02.08.2017
(73) Proprietor: Telefonaktiebolaget LM Ericsson (publ), 164 83 Stockholm (SE)
(72) Inventor: MUKHERJEE, Amitav, Fremont, California 94538 (US); LARSSON, Daniel, SE-186 53 Vallentuna (SE); KOORAPATY, Havish, Saratoga, California 95070 (US); CHENG, Jung-Fu, Fremont, California 94539 (US)
(74) Representative: Zacco Sweden AB
(86) International application number: PCT/SE2015/050999
(87) International publication number: WO 2016/048222

(56) References cited:
- WO-A1-2014/035415
- US-A1- 2013 163 543

## Description

### TRANSMISSION CONFIRMATION SIGNAL ON LBT CARRIER

The present disclosure pertains to the field of wireless communications, in particular to communication utilizing a Listen-Before-Talk procedure.

### BACKGROUND

The 3^{rd} Generation Partnership Project (3GPP) initiative "License Assisted Access" (LAA) intends to allow Long Term Evolution (LTE) equipment to also operate in the unlicensed 5 GHz radio spectrum. The unlicensed 5 GHz spectrum is used as a complement to the licensed spectrum. Accordingly, devices connect in the licensed spectrum (Primary Cell or PCell) and use carrier aggregation to benefit from additional transmission capacity in the unlicensed spectrum (Secondary Cell or SCell). To reduce the changes required for aggregating licensed and unlicensed spectrum, the LTE frame timing in the primary cell is simultaneously used in the secondary cell.

Regulatory requirements, however, may not permit transmissions in the unlicensed spectrum without prior channel sensing. Since the unlicensed spectrum must be shared with other radios of similar or dissimilar wireless technologies, a so called Listen-Before-Talk (LBT) method needs to be applied. Today, the unlicensed 5 GHz spectrum is mainly used by equipment implementing the IEEE 802.11 Wireless Local Area Network (WLAN) standard. This standard is known under its marketing brand "Wi-Fi."

The LBT procedure leads to uncertainty at the Evolved Universal Terrestrial Radio Access Network (E-UTRAN) NodeB (eNB) regarding whether it will be able to transmit downlink (DL) subframe(s) or not. This leads to a corresponding uncertainty at the User Equipment (UE) as to whether it actually has a subframe to decode. An analogous uncertainty exists in the uplink (UL) direction, where the eNB is uncertain if the UEs scheduled on the SCell actually transmitted.

US 2013/0163543 A1 describes a control signaling in LTE carrier aggregation. Licensed and unlicensed bands are discussed. eNBs and corresponding wireless transmit/receive units can change mode of operation between one mode where grant cancellation is transmitted to another mode where grant confirmation might be transmitted. Uplink grant confirmations might be transmitted on the licensed band.

WO 2014/035415 A1 describes a method for coordination of wireless transmission in a frequency band. A controller might determine when channel reservation begins on several eNBs.

### SUMMARY

The solution presented herein introduces a confirmation signal when a wireless transmitter determines a channel associated with unlicensed wireless spectrum of a secondary cell is idle. If the secondary cell channel is idle, the wireless transmitter provides the confirmation signal to a wireless receiver to alert the wireless receiver to the commencement of valid data transmissions via the secondary cell.

One exemplary embodiment comprises a method, implemented in a wireless transmitter associated with license assisted access wireless communications between the wireless transmitter and a wireless receiver. The licensed assisted access wireless communications comprise communications using both a licensed wireless spectrum associated with a primary cell and an unlicensed wireless spectrum associated with a secondary cell. The method comprises determining whether a secondary cell channel between the wireless transmitter and the wireless receiver is idle, where the secondary cell channel is associated with the unlicensed wireless spectrum of the secondary cell. If the secondary cell channel is idle, the method further comprises subsequently transmitting a confirmation signal from the wireless transmitter to the wireless receiver via the secondary cell. The confirmation signal alerts the wireless receiver to the commencement of valid data transmissions from the wireless transmitter via the secondary cell.

One exemplary embodiment comprises a wireless transmitter associated with license assisted access wireless communications between the wireless transmitter and a wireless receiver. The licensed assisted access wireless communications comprise communications using both a licensed wireless spectrum associated with a primary cell and an unlicensed wireless spectrum associated with a secondary cell. The wireless transmitter is configured to determine whether a secondary cell channel between the wireless transmitter and the wireless receiver is idle, where the secondary cell channel is associated with the unlicensed wireless spectrum of the secondary cell. If the secondary cell channel is idle, the wireless transmitter subsequently transmits a confirmation signal to the wireless receiver. The confirmation signal alerts the wireless receiver to the commencement of valid data transmissions from the wireless transmitter via the secondary cell.

One exemplary embodiment comprises a method, implemented in a wireless receiver associated with license assisted access wireless communications between a wireless transmitter and the wireless receiver. The licensed assisted access wireless communications comprise communications using both a licensed wireless spectrum associated with a primary cell and an unlicensed wireless spectrum associated with a secondary cell. The method comprises receiving a subframe from the wireless transmitter via a secondary cell channel, where the secondary cell channel is associated with the unlicensed wireless spectrum of the secondary cell, and determining whether a confirmation signal is present in the subframe. If the confirmation signal is present, the method further includes decoding information in the subframe.

One exemplary embodiment comprises a wireless receiver associated with license assisted access wireless communications between a wireless transmitter and the wireless receiver. The licensed assisted access wireless communications comprise communications using both a licensed wireless spectrum associated with a primary cell and an unlicensed wireless spectrum associated with a secondary cell. The wireless receiver is configured to receive a subframe from the wireless transmitter via a secondary cell channel, where the secondary cell channel is associated with the unlicensed wireless spectrum of the secondary cell, and determine whether a confirmation signal is present in the subframe. If the confirmation signal is present, the wireless receiver is configured to decode information in the subframe.

One exemplary embodiment comprises a computer program product stored in a non-transitory computer readable medium for controlling a wireless transmitter. The computer program product comprises software instructions which, when run on the wireless transmitter, causes the wireless transmitter to determine whether a secondary cell channel between the wireless transmitter and the wireless receiver is idle, where the secondary cell channel is associated with the unlicensed wireless spectrum of the secondary cell. If the secondary cell channel is idle, the software instructions cause the wireless transmitter to subsequently transmit a confirmation signal from the wireless transmitter to the wireless receiver. The confirmation signal alerts the wireless receiver to the commencement of valid data transmissions from the wireless transmitter via the secondary cell.

One exemplary embodiment comprises a computer program product stored in a non-transitory computer readable medium for controlling a wireless receiver. The computer program product comprises software instructions which, when run on the wireless receiver, causes the wireless receiver to receive a subframe from the wireless transmitter via a secondary cell channel, where the secondary cell channel is associated with the unlicensed wireless spectrum of the secondary cell, and determine whether a confirmation signal is present in the subframe. If the confirmation signal is present, the software instructions cause the wireless receiver to decode information in the subframe.

### BRIEF DESCRIPTION OF THE DRAWINGS

Figure 1 shows an example of a basic LTE downlink physical resource.
Figure 2 shows an example of an LTE time-domain structure.
Figure 3 shows an example of an LTE downlink subframe.
Figure 4 shows an example of an aggregated bandwidth.
Figure 5 shows an exemplary Listen-Before-Talk mechanism.
Figure 6 shows an example of LAA to unlicensed spectrum using LTE aggregation.
Figure 7 shows exemplary cross-carrier scheduling without a SCell downlink transmission.
Figure 8 shows a downlink subframe according to one exemplary embodiment.
Figure 9 shows an uplink subframe according to one exemplary embodiment.
Figure 10 shows an exemplary wireless communication system.
Figure 11 shows a transmission method according to one exemplary embodiment.
Figure 12 shows a reception method according to one exemplary embodiment.
Figure 13 shows a block diagram of a wireless transmitter according to another exemplary embodiment.
Figure 14 shows a block diagram of a wireless receiver according to another exemplary embodiment.

### DETAILED DESCRIPTION

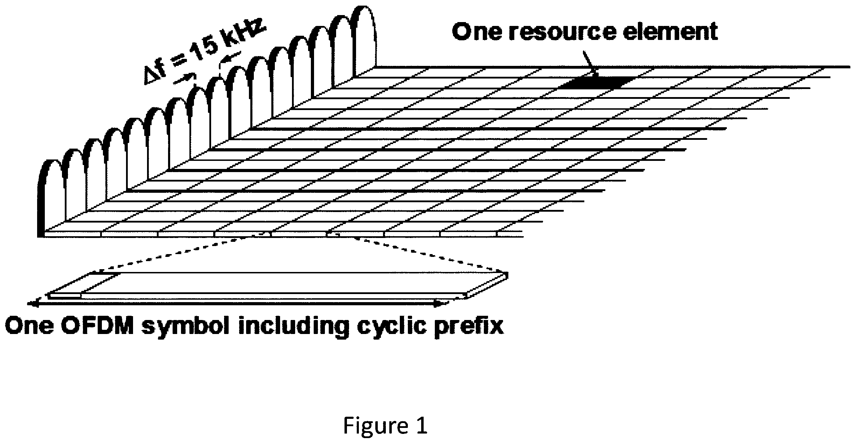

LTE uses Orthogonal Frequency Division Multiplexing (OFDM) in the downlink and Discrete Fourier Transform (DFT)-spread OFDM (also referred to as single-carrier Frequency Division Multiple Access (FDMA) (SC-FDMA)) in the uplink. The basic LTE downlink physical resource can thus be seen as a time-frequency grid as illustrated in Figure 1**Error! Reference source not found.,** where each resource element corresponds to one OFDM subcarrier during one OFDM symbol interval. The uplink subframe has the same subcarrier spacing as the downlink and the same number of SC-FDMA symbols in the time domain as OFDM symbols in the downlink.

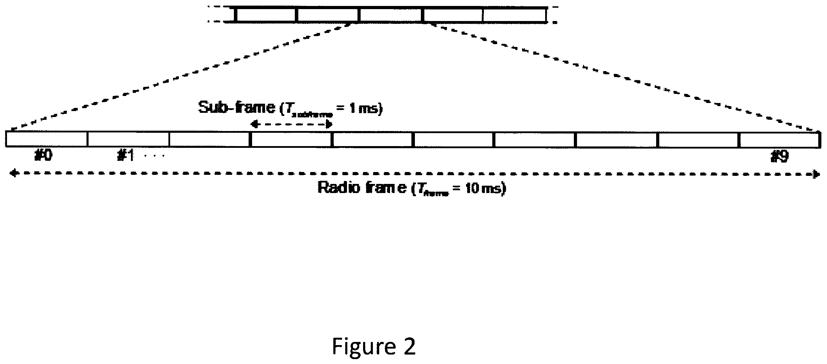

In the time domain, LTE downlink transmissions are organized into radio frames of 10 ms, each radio frame consisting of ten equally-sized subframes of length T_{subframe} = 1 ms, as shown in Figure 2. For a normal cyclic prefix, one subframe comprises 14 OFDM symbols. The duration of each symbol is approximately 71.4 µs.

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

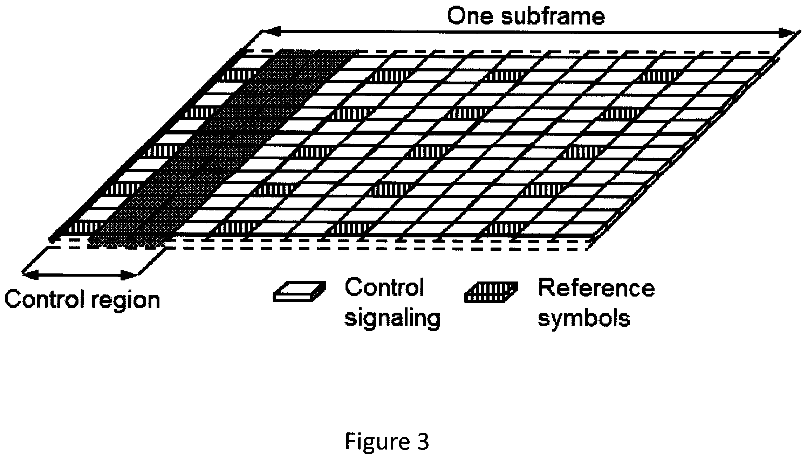

Downlink transmissions are dynamically scheduled, e.g., in each subframe the base station transmits control information about which terminals data is transmitted to and upon which resource blocks the data is transmitted, in the current downlink subframe. This control signaling is typically transmitted in the first 1, 2, 3, or 4 OFDM symbols in each subframe and the number n = 1, 2, 3, or 4 is known as the Control Format Indicator (CFI). The downlink subframe also contains common reference symbols, which are known to the receiver and used for coherent demodulation of, e.g., the control information. Figure 3 shows a downlink system with CFI = 3 OFDM symbols for control.

From LTE Rel-11 onwards, the above described resource assignments can also be scheduled on the Enhanced Physical Downlink Control Channel (EPDCCH). For Rel-8 to Rel-10, only the Physical Downlink Control Channel (PDCCH) is available. The reference symbols shown in the above Figure 3 comprise Cell-specific Reference Symbols (CRS), and are used to support multiple functions including fine time and frequency synchronization and channel estimation for certain transmission modes.

The PDCCH/EPDCCH is used to carry downlink control information (DCI), e.g., scheduling decisions and power-control commands. More specifically, the DCI includes:
- Downlink scheduling assignments, including a Physical Downlink Shared Channel (PDSCH) resource indication, transport format, hybrid-Automatic Repeat reQuest (hybrid-ARQ) information, and control information related to spatial multiplexing (if applicable). A downlink scheduling assignment also includes a command for power control of the Physical Uplink Control Channel (PUCCH) used for transmission of hybrid-ARQ acknowledgements in response to downlink scheduling assignments.
- Uplink scheduling grants, including a Physical Uplink Shared channel (PUSCH) resource indication, transport format, and hybrid-ARQ-related information. An uplink scheduling grant also includes a command for power control of the PUSCH.
- Power-control commands for a set of terminals as a complement to the commands included in the scheduling assignments/grants.

One PDCCH/EPDCCH carries one DCI message containing one of the groups of information listed above. As multiple terminals can be scheduled simultaneously, and each terminal can be scheduled on both downlink and uplink simultaneously, there must be a possibility to transmit multiple scheduling messages within each subframe. Each scheduling message is transmitted on separate PDCCH/EPDCCH resources. Consequently, there are typically multiple simultaneous PDCCH/EPDCCH transmissions within each subframe in each cell. Furthermore, to support different radio-channel conditions, link adaptation can be used, where the code rate of the PDCCH/EPDCCH is selected by adapting the resource usage for the PDCCH/EPDCCH, to match the radio-channel conditions.

Here follows a discussion on the start symbol for PDSCH and EPDCCH within the subframe. The OFDM symbols in the first slot are numbered from 0 to 6. For transmission modes 1-9, the starting OFDM symbol in the first slot of the subframe for EPDCCH can be configured by higher layer signaling and the same is used for the corresponding scheduled PDSCH. Both sets have the same EPDCCH starting symbol for these transmission modes. If not configured by higher layers, the start symbol for both PDSCH and EPDCCH is given by the CFI value signaled in PCFICH.

Multiple OFDM starting symbol candidates can be achieved by configuring the UE in transmission mode 10, by having multiple EPDCCH Physical Resource Block (PRB) configuration sets where for each set the starting OFDM symbol in the first slot in a subframe for EPDCCH can be configured by higher layers to be a value from {1,2,3,4}, independently for each EPDCCH set. If a set is not higher layer configured to have a fixed start symbol, then the EPDCCH start symbol for this set follows the CFI value received in the Physical CFI Channel (PCFICH).

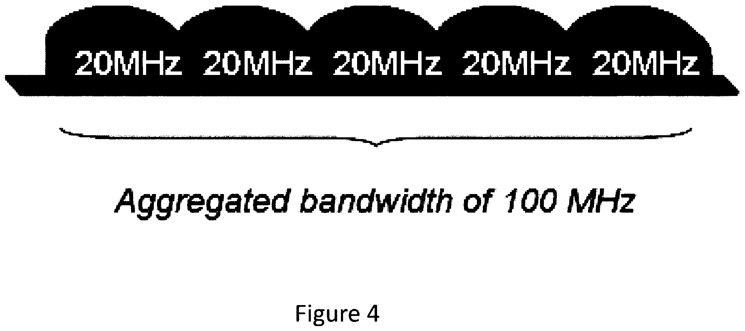

The LTE Rel-10 standard supports bandwidths larger than 20 MHz. One important requirement on LTE Rel-10 is to assure backward compatibility with LTE Rel-8. This should also include spectrum compatibility. That would imply that an LTE Rel-10 carrier wider than 20 MHz should appear as a number of LTE carriers to an LTE Rel-8 terminal. Each such carrier can be referred to as a Component Carrier (CC). In particular for early LTE Rel-10 deployments it can be expected that there will be a smaller number of LTE Rel-10-capable terminals compared to many LTE legacy terminals. Therefore, it is necessary to assure an efficient use of a wide carrier also for legacy terminals, e.g., that it is possible to implement carriers where legacy terminals can be scheduled in all parts of the wideband LTE Rel-10 carrier. The straightforward way to obtain this would be by means of Carrier Aggregation (CA). CA implies that an LTE Rel-10 terminal can receive multiple CCs, where the CCs have, or at least the possibility to have, the same structure as a Rel-8 carrier. Figure 4 shows CA. A CA-capable UE is assigned a primary cell (PCell) which is always activated, and one or more secondary cells (SCells) which may be activated or deactivated dynamically.

The number of aggregated CCs as well as the bandwidth of the individual CC may be different for uplink and downlink. A symmetric configuration refers to the case where the number of CCs in downlink and uplink is the same whereas an asymmetric configuration refers to the case that the number of CCs is different. It is important to note that the number of CCs configured in a cell may be different from the number of CCs seen by a UE. A terminal may for example support more downlink CCs than uplink CCs, even though the cell is configured with the same number of uplink and downlink CCs.

In addition, a key feature of CA is the ability to perform cross-carrier scheduling. This mechanism allows a (E)PDCCH on one CC to schedule data transmissions on another CC by means of a 3-bit Carrier Indicator Field (CIF) inserted at the beginning of the (E)PDCCH messages. For data transmissions on a given CC, a UE expects to receive scheduling messages on the (E)PDCCH on just one CC, e.g., either the same CC, or a different CC via cross-carrier scheduling. This mapping from (E)PDCCH to PDSCH is also configured semi-statically.

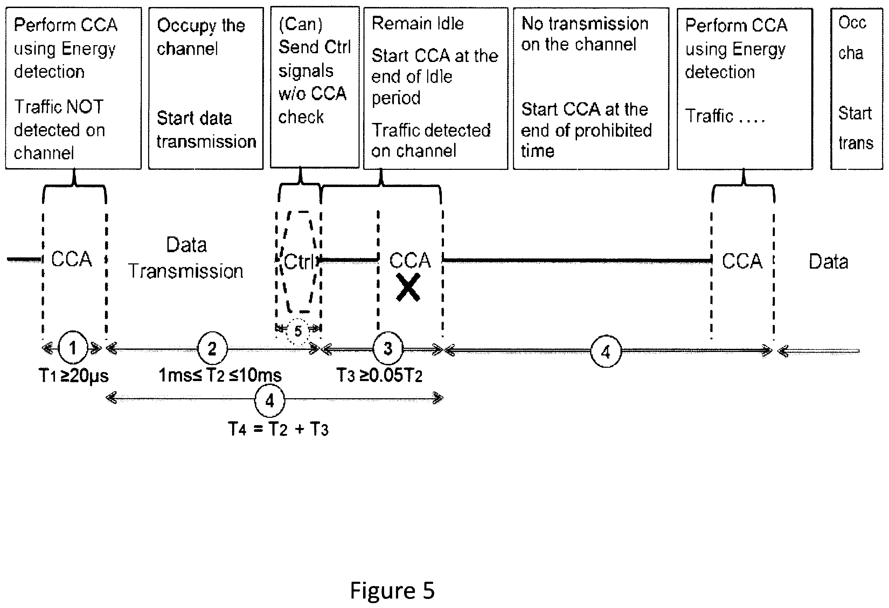

In typical deployments of WLAN, Carrier Sense Multiple Access with Collision Avoidance (CSMA/CA) is used for medium access. This means that the channel is sensed to perform a Clear Channel Assessment (CCA), and a transmission is initiated only if the channel is declared as Idle. In case the channel is declared as Busy, the transmission is essentially deferred until the channel is deemed to be Idle. When the range of several Access Points (APs) using the same frequency overlap, this means that all transmissions related to one AP might be deferred in case a transmission on the same frequency to or from another AP which is within range can be detected. Effectively, this means that if several APs are within range, they will have to share the channel in time, and the throughput for the individual APs may be severely degraded. Figure 5 shows a general illustration of the LBT mechanism.

Up to now, the spectrum used by LTE was dedicated to LTE. This has the advantage that the LTE system does not need to care about the coexistence issue and the spectrum efficiency can be maximized. However, the spectrum allocated to LTE is limited, and therefore cannot meet the ever increasing demand for larger throughput from applications/services. Therefore, a new study item has been initiated in 3GPP on extending LTE to exploit unlicensed spectrum in addition to licensed spectrum. Unlicensed spectrum can, by definition, be simultaneously used by multiple different technologies. Therefore, LTE needs to consider the coexistence issue with other systems, e.g., IEEE 802.11 (Wi-Fi). Operating LTE in the same manner in unlicensed spectrum as in licensed spectrum can seriously degrade the performance of Wi-Fi as Wi-Fi will not transmit once it detects the channel is occupied.

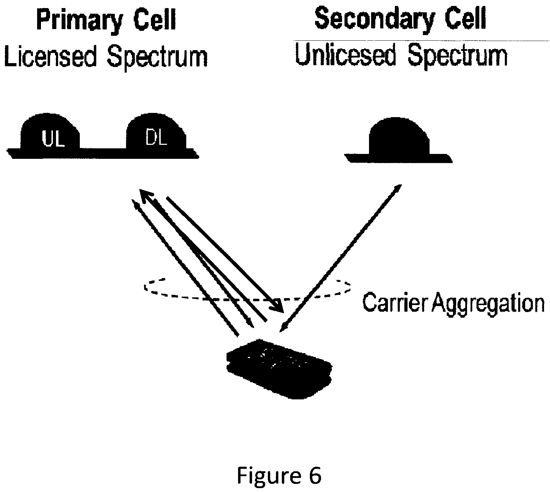

Furthermore, one way to utilize the unlicensed spectrum reliably is to transmit essential control signals and channels on a licensed carrier. That is, as shown in Figure 6, a UE may be connected to a PCell in the licensed band and to one or more SCells in the unlicensed band. In this application we denote a secondary cell in the unlicensed spectrum as License-Assisted Access Secondary Cell (LAA SCell).

Due to the uncertainty in data transmission on the LAA SCell, it is possible for UEs to be scheduled for DL service on the SCell, but actually not receive any data in that subframe due to a failed SCell LBT. This scheduling may have been performed in that same subframe period via cross-carrier scheduling on the PCell, or via multi-subframe scheduling on the LAA SCell on a previous subframe. Due to implementation constraints in non-collocated deployment scenarios, the cross-carrier PCell scheduling grants may be sent without having prior knowledge of the LBT status of the SCell, and the PCell subframe cannot be modified in time due to communication latency between the remote SCell and PCell.

If a UE has been scheduled on a particular subframe on the LAA SCell and tries to perform channel estimation, time-frequency tracking, decoding, etc., when no subframe has actually been transmitted by the SCell, it may severely degrade the accuracy of the tracking loops, RRM measurements, receiver buffer/soft buffer samples, etc. There is currently no mechanism to prevent the scheduled UEs from attempting to decode a non-existent subframe.

An analogous uncertainty exists in the UL direction where the eNB is uncertain if the UEs scheduled on the SCell actually transmitted on the SCell. There is currently no mechanism to prevent the eNB from attempting to decode non-existent PUSCH, PUCCH, and/or SRS signals.

The problem of scheduled UEs attempting to decode non-existent subframes on a DL LBT carrier is solved by including a confirmation signal in the first subframe transmitted after a successful LBT phase. Scheduled UEs can autonomously verify that a valid subframe is actually available for decoding on the LBT carrier. If no confirmation signal is detected, the scheduled UEs discard their received samples for that subframe duration. The problem of eNB attempting to decode non-existent PUSCH, PUCCH, or SRS signals on an UL LBT carrier is similarly solved by including a confirmation signal in the first UL subframe transmitted after a successful LBT phase. The solution presented herein teaches the modification of the LTE specs to accommodate a new confirmation signal for DL and UL subframes on LBT carriers designed for the purpose described above.

One advantage with the solution presented herein is that, on the DL, the confirmation signal can be used by UEs to verify if their scheduled grant was actually transmitted on the LBT carrier. Another advantage provided by the solution presented herein is that, on the UL, the confirmation signal can be used by eNBs to verify if the UEs with scheduled UL grants actually transmitted on the LBT carrier. The following provides additional details regarding such a confirmation signal, referred to herein as a Transmission Confirmation Signal (TCS), which is embedded in the first subframe after successful LBT. The TCS may be transmitted on either/both DL and UL subframes on the LBT carrier, for both Frequency Division Duplexing (FDD) and Time Division Duplexing (TDD) systems.

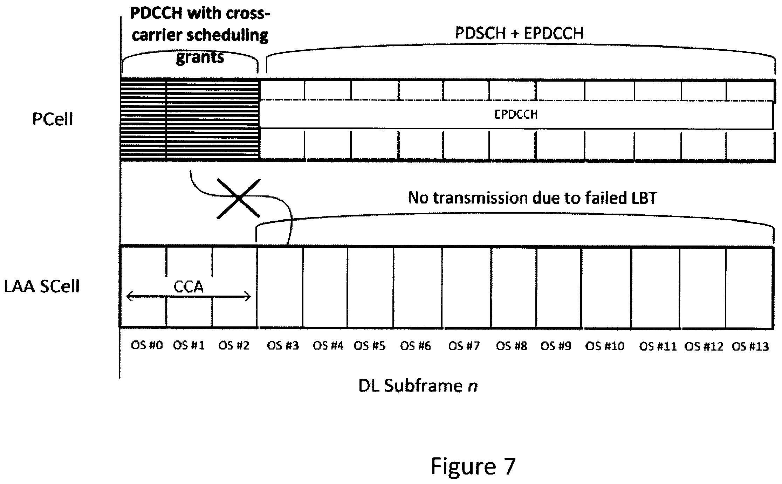

Figure 7 shows one exemplary scenario illustrating the main motivation for introducing the TCS. Assume an eNB operates two carriers with the PCell on a licensed band and the SCell as an LAA carrier. On some subframe n, the PCell employs cross-carrier scheduling to schedule a set of UEs for reception on the SCell currently not occupying the channel, e.g., the SCell was silent at least in the period of subframe n-1. Therefore, the SCell must perform LBT to determine if it is allowed to transmit in subframe *n.* If the LBT of the SCell fails after an extended CCA over the first three OFDM symbols (in this example), then it does not transmit anything on subframe n. However, the UEs that were able to decode their scheduling grants on the PCell are unaware of the lack of an SCell transmission. Note that nothing can be transmitted in the legacy PDCCH region due to LBT at the start of the subframe.

The above example is easily extended to the case of multiple LAA SCells, or when the cross-carrier scheduling is performed by another SCell that currently occupies the channel, or when self-scheduling was performed by the LAA SCell on a prior subframe based on multi-subframe or cross-subframe scheduling.

If a UE scheduled on a particular subframe on the LAA SCell tries to perform channel estimation, time-frequency tracking, RRM measurements, decoding, etc., when no subframe has actually been transmitted by the SCell, it may severely degrade the accuracy of the tracking loops, RRM measurements, and receiver buffer/soft buffer samples. This is in addition to wasteful power consumption by the UEs which try to decode the missing subframe on the SCell. Currently there is no mechanism to inform the UEs of this scenario.

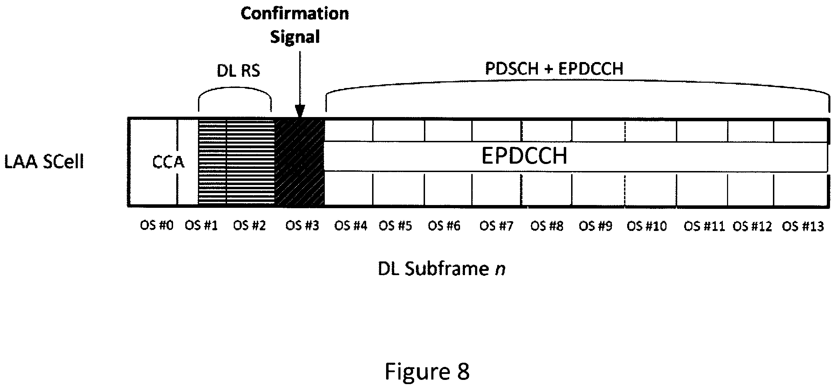

The TCS is a cell-specific L1 signal designed to alert the UEs when DL transmissions on an LAA SCell are actually present. Figure 8 shows an example of the TCS being transmitted in the fourth OFDM symbol of the first DL subframe after successful LBT at the beginning of the subframe.

In the example of Figure 8, it is assumed that the extended CCA finds the channel to be idle within the first two OFDM symbols, after which the SCell immediately transmits DL RS up to the third OFDM symbol to occupy the channel. The new TCS is transmitted on the fourth OFDM symbol, followed by legacy PDSCH and EPDCCH if configured. It is also possible for the TCS to span more than one OFDM symbol to increase the detection probability at the UEs, and for the transmit location of the TCS to be variable within the subframe.

Another possibility for the TCS is a time-domain signal that is defined to be relatively short in time and may be repeated by the eNB. As the signal is short in time, the signal can instead be transmitted during the DL RS period above and does not need to be a complete OFDM symbol of length in time. The same sequence can then be repeated multiple times until the normal data from the cell is transmitted, e.g., on the PDSCH or/and EPDCCH. By having a shorter sequence in time the additional overhead created by the signal will be less.

If LBT is always performed by the SCell at the start of the subframe, then UEs that are scheduled on LBT carriers scan the first few OFDM symbols of the subframe to detect the TCS. If LBT is always performed by the SCell in the last few OFDM symbols prior to the subframe boundary, then TCS may not be necessary since the first subframe after LBT will be a normal subframe without puncturing. The TCS may still be sent, however, to provide additional confirmation of the LBT. In addition, the UE behavior needs to be specified for the following four cases that may occur:
1. Scheduling grant is successfully decoded and TCS is detected on LAA SCell: The UE assumes that the LAA SCell transmitted the scheduled DL subframe, and applies existing Rel-12 procedures for processing the PDSCH region of the SCell DL subframe, with the understanding that CRS may not be present in all or part of the subframe.
2. Scheduling grant is successfully decoded but TCS is not detected on LAA SCell: The UE assumes that the LAA SCell failed to transmit the scheduled DL subframe, and thus does not use its received samples for that subframe for channel estimation, time-frequency tracking, RRM measurements, decoding, etc.
3. Scheduling grant is not decoded but TCS is detected on LAA SCell: The UE applies Rel-12 procedures for when no scheduling grant is detected.
4. Neither scheduling grant nor TCS is detected: The UE follows Rel-12 procedures for when no scheduling grant is detected.

The structure of the TCS is described next. In one embodiment, the TCS is a wideband signal spanning multiple Radio Bearers (RBs) because the TCS comprises a cell-specific broadcast signal. The frequency span can be up to the DL system bandwidth for robust detection by UEs. One TCS is defined per antenna port. The frequency-domain density is, e.g., four equi-spaced Resource Elements (REs) within a RB, with a different frequency-domain offset depending on the SCell ID. The frequency-domain start position of the TCS for a particular SCell can also be indicated to UEs using higher-layer signaling. As a non-limiting example, the TCS sequence can be based on a constant amplitude zero autocorrelation (CAZAC) sequence, e.g., a Zadoff-Chu sequence.

The above sequence can, for all cases, also be used to indicate how many subframes the eNB intends to continuously continue to transmit. The TCS of one eNB can be used by adjacent eNBs that detect the signal to avoid performing LBT until the given time period by the transmitting eNB has ended. In another case the signal can also be used by UEs to allow them to determine how the PDSCH and EPDCCH is mapped if that is changed for different subframes. The TCS may also be transmitted in another frequency-time location than the fourth OFDM symbol of the first DL subframe after successful LBT described above. Further, the TCS can be transmitted in more than one frequency-time location.

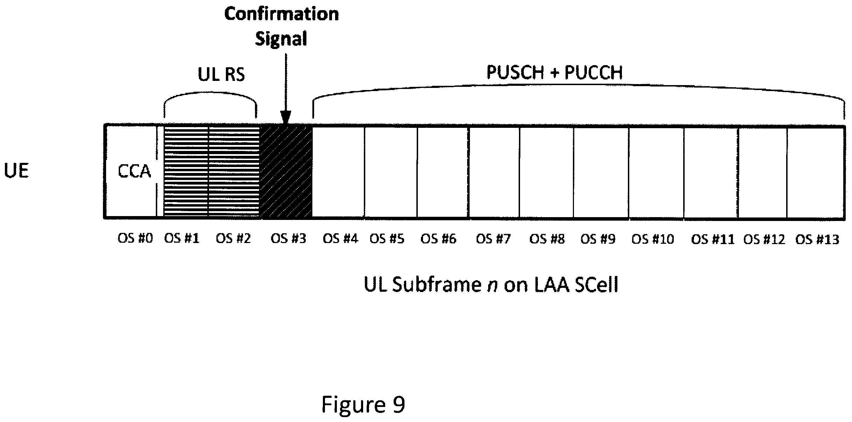

The motivation to use the TCS on the uplink is similar to the downlink case. The TCS allows the eNB to verify if scheduled UEs actually transmitted on their UL grants after the UE performs LBT. In one exemplary embodiment, the TCS is transmitted in the first UL subframe successfully transmitted by the UE on the LAA SCell after LBT, as shown in Figure 9.

In other embodiments, the TCS may be transmitted on UL subframes sent on the PCell to indicate if an UL subframe is also being transmitted on the LAA SCell. In one non-limiting embodiment, this can be implemented by allocating PUCCH Format 1 resource on the PCell for subframe n to the UE. A UE shall transmit a PUCCH Format 1 signal in the allocated resource only if the UE has succeeded in acquiring UL transmission(s) on the LAA SCell after performing LBT. Absence of the PUCCH signal indicates to the eNB that LBT for the corresponding UE failed. It is a further teaching that a common pool of PUCCH Format 1 resources are allocated by the network via higher layer signaling to UE. The UE is provided the index to the PUCCH Format 1 resource it can use in the UL scheduling message sent to the UE. The eNB receiver shall process the received PUCCH signal considering the signal in the first three OFDM symbols may not be transmitted by the UE because the UE will transmit the corresponding the signal in these OFDM symbols only after the success of the LBT is resolved.

The structure of the UL TCS may be similar to the DL case described in the previous section. In another embodiment, the UL TCS may be transmitted only within the scheduled UL bandwidth granted to the UE for its PUSCH transmission.

The solution presented herein defines a new transmission confirmation signal for DL and UL subframes on a LBT carrier. The TCS is embedded in the first subframe transmitted after a successful LBT phase. The DL TCS is used by UEs to verify if their scheduled grant was actually transmitted on the LBT carrier. The UL TCS is used by the eNB to verify if the scheduled UEs actually transmitted on their UL grant. Thus, the solution presented herein may help improve the accuracy of LAA wireless communications. It should be noted that, as shown e.g. in the embodiments of Figures 8 or 9, that the first subframe transmitted after a successful LBT phase may include the LBT phase (respectively associated CCA actions and/or extended CCA).

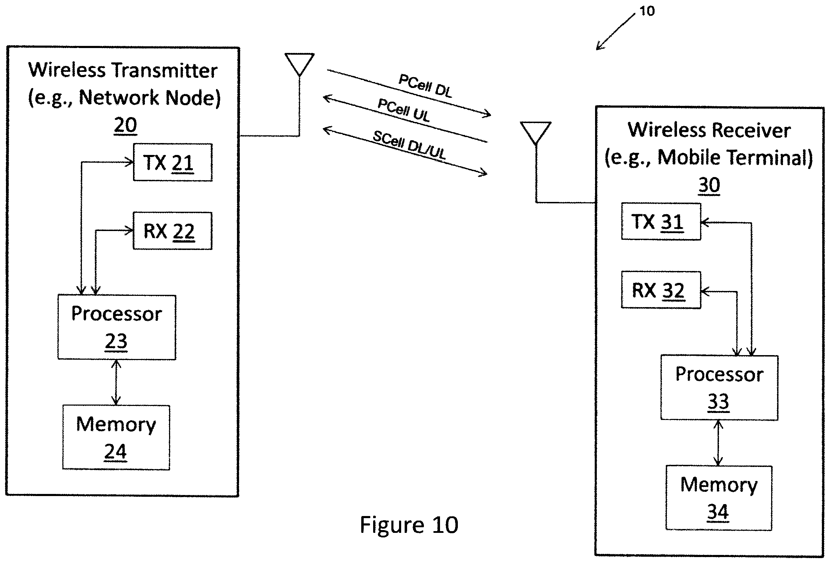

Figure 10 shows one exemplary wireless network 10 comprising a wireless transmitter 20 and a wireless receiver 30. In the Example of Figure 10, the wireless transmitter 20 comprises a network node, e.g., an eNB, and the wireless receiver 30 comprises a mobile terminal, e.g., a UE, where transmissions in the PCell and SCell comprise downlink transmissions. It will be appreciated, however, that the wireless transmitter 20 and wireless receiver 30 may alternatively comprise a mobile terminal and network node, respectively, where transmissions in the PCell and SCell comprise uplink transmissions. Further, while Figure 10 implies the PCell and SCell are collocated, it will be appreciated that in some embodiments, the PCell and SCell are not collocated.

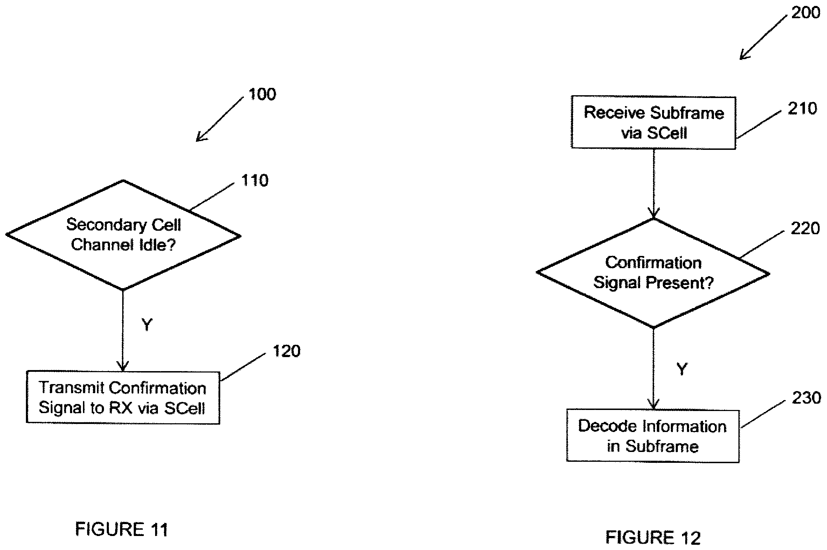

Wireless transmitter 20 is configured to implement the method 100 of Figure 11. To that end, the wireless transmitter 20 is configured to determine whether a secondary cell channel between the wireless transmitter 20 and the wireless receiver 30 is idle (block 110), where the secondary cell channel is the channel associated with the unlicensed wireless spectrum of the secondary cell. If the secondary cell channel is idle, the wireless transmitter 20 transmits a confirmation signal to the wireless receiver 30 (block 120). The confirmation signal alerts the wireless receiver 30 to the presence of valid transmissions from the wireless transmitter via the secondary cell. As a result, the wireless receiver will only attempt to decode information in a subframe if the wireless receiver 30 receives the confirmation signal, which may improve the accuracy of LAA wireless communications between the wireless transmitter 20 and the wireless receiver 30.

Wireless receiver 30 is configured to implement the method 200 of Figure 12. To that end, the wireless receiver 30 is configured to receive a subframe from the wireless transmitter 20 via a secondary cell channel associated with the unlicensed wireless spectrum of the secondary cell (block 210). The wireless receiver 30 is further configured to determine whether a confirmation signal is present in the received subframe (block 220). If the confirmation signal is present, the wireless receiver 30 decodes information in the received subframe (block 230). The confirmation signal alerts the wireless receiver 30 to the commencement of valid data transmissions from the wireless transmitter via the secondary cell. As a result, the wireless receiver 30 will only attempt to decode information in a subframe if the wireless receiver 30 receives the confirmation signal, which may improve the accuracy of LAA wireless communications between the wireless transmitter 20 and the wireless receiver 30.

In one exemplary embodiment, the wireless transmitter 20 may comprise a transmitter 21, receiver 22, processor circuit 23, and memory 24, as shown in Figure 10. Receiver 22 receives signals from a remote device, e.g., mobile terminal 20. The processor circuit 23 determines whether the secondary cell channel is idle according to instructions stored in memory 24. The transmitter 21 subsequently transmits the confirmation signal to the receiver 32 in the wireless receiver 30 if the secondary cell channel is idle. In one exemplary embodiment, the processor circuit 23 determines, in a first subframe, whether the secondary cell channel is idle. If so, the transmitter 21 transmits the confirmation signal in a second subframe following the first subframe. In another exemplary embodiment, the processor circuit 23 determines, in a first subframe, whether the secondary cell channel is idle. If so, the transmitter 21 transmits the confirmation signal in the first subframe following the determination that the secondary cell channel is idle.

In one exemplary embodiment, the wireless receiver 30 may comprise a transmitter 31, receiver 32, processor circuit 33, and memory 34, as shown in Figure 10. The transmitter 31 transmits signals to a remote device, e.g., a network node. The receiver 32 receives the subframe, and processor circuit 33 determines whether the confirmation signal is present and decodes the information in the subframe if the confirmation signal is present according to instructions stored in memory 34.

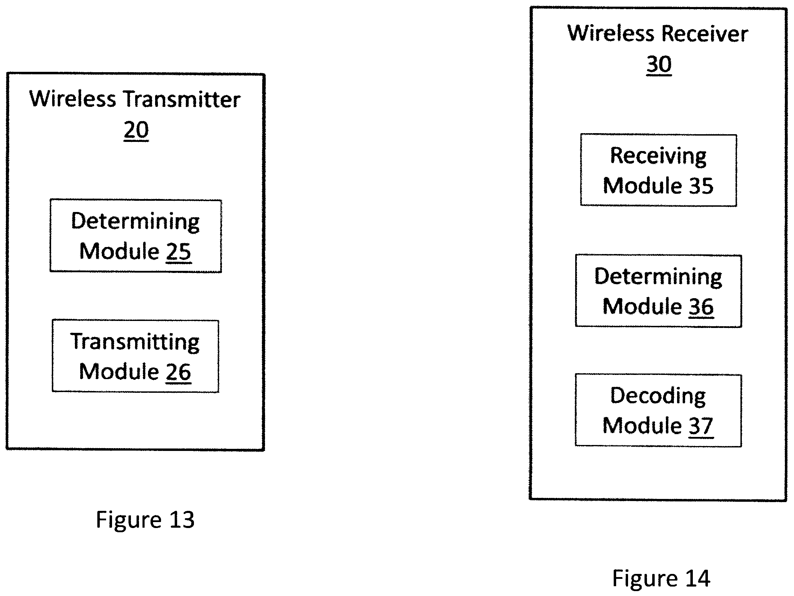

In one exemplary embodiment, the wireless transmitter 20 may comprise a determining module 25 and a transmitting module 26, as shown in Figure 13. The determining module 25 is configured to determine whether a secondary cell channel between the wireless transmitter and the wireless receiver is idle, the secondary cell channel being associated with the unlicensed wireless spectrum of the secondary cell. The transmitting module 26 is configured to subsequently transmit a confirmation signal from the wireless transmitter 20 to the wireless receiver 30 if the secondary cell channel is idle, the confirmation signal alerting the wireless receiver 30 to the commencement of valid data transmissions from the wireless transmitter 20 via the secondary cell

In one exemplary embodiment, the wireless receiver 30 may comprise a receiving module 35, a determining module 36, and a decoding module 37, as shown in Figure 14. The receiving module 35 is configured to receive a subframe from the wireless transmitter 20 via a secondary cell channel, the secondary cell channel being associated with the unlicensed wireless spectrum of the secondary cell. The determining module 36 is configured to determine whether a confirmation signal is present in the subframe. The decoding module 37 is configured to decode information in the subframe if the confirmation signal is present.

Various elements disclosed herein, e.g., a wireless transmitter, wireless receiver, transmitter, receiver, processor circuit, memory, determining module, transmitting module, receiving module, decoding module, etc., are implemented in one or more circuits. Each of these circuits may be embodied in hardware and/or in software (including firmware, resident software, microcode, etc.) executed on a controller or processor, including an application specific integrated circuit (ASIC).

The presented approaches may, of course, be carried out in other ways than those specifically set forth herein without departing from the scope of the invention as defined in the appended independent claims. The present embodiments are to be considered in all respects as illustrative and not restrictive, and all changes coming within the meaning and equivalency range of the appended claims are intended to be embraced therein.

## Claims

1. A method (100), implemented in a wireless transmitter (20) associated with license assisted access wireless communications between the wireless transmitter (20) and a wireless receiver (30), where the licensed assisted access wireless communications comprise communications using both a licensed wireless spectrum associated with a primary cell and an unlicensed wireless spectrum associated with a secondary cell, the method comprising:
determining (110) whether a secondary cell channel between the wireless transmitter (20) and the wireless receiver (30) is idle, the secondary cell channel being associated with the unlicensed wireless spectrum of the secondary cell; and
if the secondary cell channel is idle, subsequently transmitting (120) a confirmation signal from the wireless transmitter (20) to the wireless receiver (30) via the secondary cell channel, the confirmation signal alerting the wireless receiver (30) to the commencement of valid data transmissions from the wireless transmitter (20) via the secondary cell channel.

2. The method of claim 1 wherein the determining comprises determining, in a first subframe, whether the secondary cell channel is idle, and wherein the transmitting comprises subsequently transmitting the confirmation signal in the first subframe of the secondary cell following the determination.

3. The method of claim 1 wherein the determining comprises determining, in a first subframe, whether the secondary cell channel is idle, and wherein the transmitting comprises transmitting the confirmation signal in a second subframe following the first subframe.

4. The method of claim 1 wherein the wireless transmitter (20) is disposed in a network node, wherein the wireless receiver (30) is disposed in a mobile terminal, and wherein the secondary cell channel comprises a downlink channel associated with the secondary cell.

5. The method of claim 1 wherein the wireless transmitter (20) is disposed in a mobile terminal, wherein the wireless receiver (30) is disposed in a network node, and wherein the secondary cell channel comprises an uplink channel associated with the secondary cell.

6. The method of claim 1 wherein the determining occurs during at least one of a first symbol and a second symbol of a subframe, and wherein the transmitting comprises transmitting the confirmation signal in a fourth symbol of the subframe.

7. A wireless transmitter (20) associated with license assisted access wireless communications between the wireless transmitter (20) and a wireless receiver (30), where the licensed assisted access wireless communications comprise communications using both a licensed wireless spectrum associated with a primary cell and an unlicensed wireless spectrum associated with a secondary cell, the wireless transmitter (20) being configured to:
determine (25) whether a secondary cell channel between the wireless transmitter (20) and the wireless receiver (30) is idle, the secondary cell channel being associated with the unlicensed wireless spectrum of the secondary cell; and
subsequently transmit (26) a confirmation signal to the wireless receiver (30) via the secondary cell channel if the secondary cell channel is idle, the confirmation signal alerting the wireless receiver (30) to the commencement of valid data transmissions from the wireless transmitter (20) via the secondary cell channel.

8. The wireless transmitter (20) of claim 7 further comprising a memory and a processing circuit operatively coupled to the memory, the processing circuit configured to determine whether the secondary cell channel is idle according to instructions stored in the memory.

9. A method (200), implemented in a wireless receiver (30) associated with license assisted access wireless communications between a wireless transmitter (20) and the wireless receiver (30), where the licensed assisted access wireless communications comprise communications using both a licensed wireless spectrum associated with a primary cell and an unlicensed wireless spectrum associated with a secondary cell, the method comprising:
receiving (210) a subframe from the wireless transmitter (20) via a secondary cell channel, the secondary cell channel being associated with the unlicensed wireless spectrum of the secondary cell;
determining (220) whether a confirmation signal is present in the subframe; and
if the confirmation signal is present, decoding (230) information in the subframe.

10. The method of claim 9 wherein the wireless transmitter (20) is disposed in a network node, wherein the wireless receiver (30) is disposed in a mobile terminal, and wherein the secondary cell channel comprises a downlink channel associated with the secondary cell.

11. The method of claim 9 wherein the wireless transmitter (20) is disposed in a mobile terminal, wherein the wireless receiver (30) is disposed in a network node, and wherein the secondary cell channel comprises an uplink channel associated with the secondary cell.

12. A wireless receiver (30) associated with license assisted access wireless communications between a wireless transmitter (20) and the wireless receiver (30), where the licensed assisted access wireless communications comprise communications using both a licensed wireless spectrum associated with a primary cell and an unlicensed wireless spectrum associated with a secondary cell, the wireless receiver (30) being configured to:
receive (35) a subframe from the wireless transmitter (20) via a secondary cell channel, the secondary cell channel being associated with the unlicensed wireless spectrum of the secondary cell; and
determine (36) whether a confirmation signal is present in the subframe; and
if the confirmation signal is present, decode (37) information in the subframe.

13. The wireless receiver (30) of claim 12 further comprising a memory and a processing circuit operatively coupled to the memory, the processing circuit configured to determine whether the confirmation signal is present and to decode the information in the subframe if the confirmation signal is present according to instructions stored in the memory.

14. A computer program product stored in a non-transitory computer readable medium for controlling a wireless transmitter (20), the computer program product comprising software instructions which, when run on the wireless transmitter (20), causes the wireless transmitter (20) to:
determine whether a secondary cell channel between the wireless transmitter (20) and the wireless receiver (30) is idle, the secondary cell channel being associated with the unlicensed wireless spectrum of the secondary cell; and
subsequently transmit a confirmation signal from the wireless transmitter (20) to the wireless receiver (30) via the secondary cell channel if the secondary cell channel is idle, the confirmation signal alerting the wireless receiver (30) to the commencement of valid data transmissions from the wireless transmitter (20) via the secondary cell channel.

15. A computer program product stored in a non-transitory computer readable medium for controlling a wireless receiver (30), the computer program product comprising software instructions which, when run on the wireless receiver (30), causes the wireless receiver (30) to:
receive a subframe from the wireless transmitter (20) via a secondary cell channel, the secondary cell channel being associated with the unlicensed wireless spectrum of the secondary cell; and
determine whether a confirmation signal is present in the subframe; and
if the confirmation signal is present, decode information in the subframe.

## Patentansprüche

1. Verfahren (100), das in einem drahtlosen Sender (20) implementiert wird, der drahtlosen License Assisted Access-Kommunikationen zwischen dem drahtlosen Sender (20) und einem drahtlosen Empfänger (30) zugeordnet ist, wobei die drahtlosen License Assisted Access-Kommunikationen Kommunikationen umfassen, die sowohl ein lizenziertes drahtloses Spektrum, das einer primären Zelle zugeordnet ist, als auch ein unlizenziertes drahtloses Spektrum, das einer sekundären Zelle zugeordnet ist, verwenden, das Verfahren umfassend:
Bestimmen (110), ob ein Kanal einer sekundären Zelle zwischen dem drahtlosen Sender (20) und dem drahtlosen Empfänger (30) inaktiv ist, wobei der Kanal einer sekundären Zelle dem unlizenzierten drahtlosen Spektrum der sekundären Zelle zugeordnet ist; und
wenn der Kanal einer sekundären Zelle inaktiv ist, anschließendes Übertragen (120) eines Bestätigungssignals von dem drahtlosen Sender (20) an den drahtlosen Empfänger (30) über den Kanal einer sekundären Zelle, wobei das Bestätigungssignal den drahtlosen Empfänger (30) auf den Beginn von gültigen Datenübertragungen von dem drahtlosen Sender (20) über den Kanal einer sekundären Zelle hinweist.

2. Verfahren nach Anspruch 1, wobei das Bestimmen ein Bestimmen, in einem ersten Unterrahmen, umfasst, ob der Kanal einer sekundären Zelle inaktiv ist, und wobei das Übertragen ein anschließendes Übertragen des Bestätigungssignals in dem ersten Unterrahmen der sekundären Zelle nach der Bestimmung umfasst.

3. Verfahren nach Anspruch 1, wobei das Bestimmen ein Bestimmen, in einem ersten Unterrahmen, umfasst, ob der Kanal einer sekundären Zelle inaktiv ist, und wobei das Übertragen ein Übertragen des Bestätigungssignals in einem zweiten Unterrahmen nach dem ersten Unterrahmen umfasst.

4. Verfahren nach Anspruch 1, wobei der drahtlose Sender (20) in einem Netzknoten angeordnet ist, wobei der drahtlose Empfänger (30) in einem mobilen Endgerät angeordnet ist und wobei der Kanal einer sekundären Zelle einen Downlink-Kanal umfasst, der der sekundären Zelle zugeordnet ist.

5. Verfahren nach Anspruch 1, wobei der drahtlose Sender (20) in einem mobilen Endgerät angeordnet ist, wobei der drahtlose Empfänger (30) in einem Netzknoten angeordnet ist und wobei der Kanal einer sekundären Zelle einen Uplink-Kanal umfasst, der der sekundären Zelle zugeordnet ist.

6. Verfahren nach Anspruch 1, wobei das Bestimmen während mindestens einem von einem ersten Symbol und einem zweiten Symbol eines Unterrahmens erfolgt und wobei das Übertragen ein Übertragen des Bestätigungssignals in einem vierten Symbol des Unterrahmens umfasst.

7. Drahtloser Sender (20), der drahtlosen License Assisted Access-Kommunikationen zwischen dem drahtlosen Sender (20) und einem drahtlosen Empfänger (30) zugeordnet ist, wobei die drahtlosen License Assisted Access-Kommunikationen Kommunikationen umfassen, die sowohl ein lizenziertes drahtloses Spektrum, das einer primären Zelle zugeordnet ist, als auch ein unlizenziertes drahtloses Spektrum, das einer sekundären Zelle zugeordnet ist, verwenden, wobei der drahtlose Sender (20) konfiguriert ist zum:
Bestimmen (25), ob ein Kanal einer sekundären Zelle zwischen dem drahtlosen Sender (20) und dem drahtlosen Empfänger (30) inaktiv ist, wobei der Kanal einer sekundären Zelle dem unlizenzierten drahtlosen Spektrum der sekundären Zelle zugeordnet ist; und
anschließenden Übertragen (26) eines Bestätigungssignals an den drahtlosen Empfänger (30) über den Kanal einer sekundären Zelle, wenn der Kanal einer sekundären Zelle inaktiv ist, wobei das Bestätigungssignal den drahtlosen Empfänger (30) auf den Beginn von gültigen Datenübertragungen von dem drahtlosen Sender (20) über den Kanal einer sekundären Zelle hinweist.

8. Drahtloser Sender (20) nach Anspruch 7, ferner umfassend einen Speicher und eine Verarbeitungsschaltung, die in Wirkbeziehung an den Speicher gekoppelt ist, wobei die Verarbeitungsschaltung konfiguriert ist, um gemäß in dem Speicher gespeicherten Anweisungen zu bestimmen, ob der Kanal einer sekundären Zelle inaktiv ist.

9. Verfahren (200), das in einem drahtlosen Empfänger (30) implementiert wird, der drahtlosen License Assisted Access-Kommunikationen zwischen einem drahtlosen Sender (20) und dem drahtlosen Empfänger (30) zugeordnet ist, wobei die drahtlosen License Assisted Access-Kommunikationen Kommunikationen umfassen, die sowohl ein lizenziertes drahtloses Spektrum, das einer primären Zelle zugeordnet ist, als auch ein unlizenziertes drahtloses Spektrum, das einer sekundären Zelle zugeordnet ist, verwenden, das Verfahren umfassend:
Empfangen (210) eines Unterrahmens von dem drahtlosen Sender (20) über einen Kanal einer sekundären Zelle, wobei der Kanal einer sekundären Zelle dem unlizenzierten drahtlosen Spektrum der sekundären Zelle zugeordnet ist;
Bestimmen (220), ob ein Bestätigungssignal in dem Unterrahmen vorhanden ist; und
wenn das Bestätigungssignal vorhanden ist, Decodieren (230) von Informationen in dem Unterrahmen.

10. Verfahren nach Anspruch 9, wobei der drahtlose Sender (20) in einem Netzknoten angeordnet ist, wobei der drahtlose Empfänger (30) in einem mobilen Endgerät angeordnet ist und wobei der Kanal einer sekundären Zelle einen Downlink-Kanal umfasst, der der sekundären Zelle zugeordnet ist.

11. Verfahren nach Anspruch 9, wobei der drahtlose Sender (20) in einem mobilen Endgerät angeordnet ist, wobei der drahtlose Empfänger (30) in einem Netzknoten angeordnet ist und wobei der Kanal einer sekundären Zelle einen Uplink-Kanal umfasst, der der sekundären Zelle zugeordnet ist.

12. Drahtloser Empfänger (30), der drahtlosen License Assisted Access-Kommunikationen zwischen einem drahtlosen Sender (20) und dem drahtlosen Empfänger (30) zugeordnet ist, wobei die drahtlosen License Assisted Access-Kommunikationen Kommunikationen umfassen, die sowohl ein lizenziertes drahtloses Spektrum, das einer primären Zelle zugeordnet ist, als auch ein unlizenziertes drahtloses Spektrum, das einer sekundären Zelle zugeordnet ist, verwenden, wobei der drahtlose Empfänger (30) konfiguriert ist zum:
Empfangen (35) eines Unterrahmens von dem drahtlosen Sender (20) über einen Kanal einer sekundären Zelle, wobei der Kanal einer sekundären Zelle dem unlizenzierten drahtlosen Spektrum der sekundären Zelle zugeordnet ist; und
Bestimmen (36), ob ein Bestätigungssignal in dem Unterrahmen vorhanden ist; und
wenn das Bestätigungssignal vorhanden ist, Decodieren (37) von Informationen in dem Unterrahmen.

13. Drahtloser Empfänger (30) nach Anspruch 12, ferner umfassend einen Speicher und eine Verarbeitungsschaltung, die in Wirkbeziehung an den Speicher gekoppelt ist, wobei die Verarbeitungsschaltung konfiguriert ist, um gemäß in dem Speicher gespeicherten Anweisungen zu bestimmen, ob das Bestätigungssignal vorhanden ist, und die Informationen in dem Unterrahmen zu decodieren, wenn das Bestätigungssignal vorhanden ist.

14. Computerprogrammprodukt, das in einem nichtflüchtigen computerlesbaren Medium zum Steuern eines drahtlosen Senders (20) gespeichert ist, wobei das Computerprogrammprodukt Softwarebefehle umfasst, die, wenn sie auf dem drahtlosen Sender (20) ausgeführt werden, den drahtlosen Sender (20) veranlassen zum:
Bestimmen, ob ein Kanal einer sekundären Zelle zwischen dem drahtlosen Sender (20) und dem drahtlosen Empfänger (30) inaktiv ist, wobei der Kanal einer sekundären Zelle dem unlizenzierten drahtlosen Spektrum der sekundären Zelle zugeordnet ist; und
anschließenden Übertragen eines Bestätigungssignals von dem drahtlosen Sender (20) über den Kanal einer sekundären Zelle an den drahtlosen Empfänger (30), wenn der Kanal einer sekundären Zelle inaktiv ist, wobei das Bestätigungssignal den drahtlosen Empfänger (30) auf den Beginn von gültigen Datenübertragungen von dem drahtlosen Sender (20) über den Kanal einer sekundären Zelle hinweist.

15. Computerprogrammprodukt, das in einem nichtflüchtigen computerlesbaren Medium zum Steuern eines drahtlosen Empfängers (30) gespeichert ist, wobei das Computerprogrammprodukt Softwarebefehle umfasst, die, wenn sie auf dem drahtlosen Empfänger (30) ausgeführt werden, den drahtlosen Empfänger (30) veranlassen zum:
Empfangen eines Unterrahmens von dem drahtlosen Sender (20) über einen Kanal einer sekundären Zelle, wobei der Kanal einer sekundären Zelle dem unlizenzierten drahtlosen Spektrum der sekundären Zelle zugeordnet ist; und
Bestimmen, ob ein Bestätigungssignal in dem Unterrahmen vorhanden ist; und
wenn das Bestätigungssignal vorhanden ist, Decodieren von Informationen in dem Unterrahmen.

## Revendications

1. Procédé (100), implémenté dans un émetteur sans fil (20) associé à des communications sans fil à accès assisté par licence entre l'émetteur sans fil (20) et un récepteur sans fil (30), où les communications sans fil à accès assisté par licence comprennent des communications en utilisant à la fois un spectre sans fil sous licence associé à une cellule primaire et un spectre sans fil sans licence associé à une cellule secondaire, le procédé comprenant :
le fait de déterminer (110) si un canal de cellule secondaire entre l'émetteur sans fil (20) et le récepteur sans fil (30) est inactif, le canal de cellule secondaire étant associé au spectre sans fil sans licence de la cellule secondaire ; et
si le canal de cellule secondaire est inactif, la transmission ultérieure (120) d'un signal de confirmation depuis l'émetteur sans fil (20) vers le récepteur sans fil (30) via le canal de cellule secondaire, le signal de confirmation alertant le récepteur sans fil (30) au lancement de transmissions de données valides depuis l'émetteur sans fil (20) via le canal de cellule secondaire.

2. Procédé selon la revendication 1 dans lequel la détermination comprend le fait de déterminer, dans une première sous-trame, si le canal de cellule secondaire est inactif, et dans lequel la transmission comprend la transmission ultérieure du signal de confirmation dans la première sous-trame de la cellule secondaire à la suite de la détermination.

3. Procédé selon la revendication 1 dans lequel la détermination comprend le fait de déterminer, dans une première sous-trame, si le canal de cellule secondaire est inactif, et dans lequel la transmission comprend la transmission du signal de confirmation dans une deuxième sous-trame suivant la première sous-trame.

4. Procédé selon la revendication 1 dans lequel l'émetteur sans fil (20) est disposé dans un noeud de réseau, dans lequel le récepteur sans fil (30) est disposé dans un terminal mobile, et dans lequel le canal de cellule secondaire comprend un canal de liaison descendante associé à la cellule secondaire.

5. Procédé selon la revendication 1 dans lequel l'émetteur sans fil (20) est disposé dans un terminal mobile, dans lequel le récepteur sans fil (30) est disposé dans un noeud de réseau, et dans lequel le canal de cellule secondaire comprend un canal de liaison montante associé à la cellule secondaire.

6. Procédé selon la revendication 1 dans lequel la détermination se produit pendant au moins l'un parmi un premier symbole et un deuxième symbole d'une sous-trame, et dans lequel la transmission comprend la transmission du signal de confirmation dans un quatrième symbole de la sous-trame.

7. Émetteur sans fil (20) associé à des communications sans fil à accès assisté par licence entre l'émetteur sans fil (20) et un récepteur sans fil (30), où les communications sans fil à accès assisté par licence comprennent des communications en utilisant à la fois un spectre sans fil sous licence associé à une cellule primaire et un spectre sans fil sans licence associé à une cellule secondaire, l'émetteur sans fil (20) étant configuré pour :
déterminer (25) si un canal de cellule secondaire entre l'émetteur sans fil (20) et le récepteur sans fil (30) est inactif, le canal de cellule secondaire étant associé au spectre sans fil sans licence de la cellule secondaire ; et
transmettre ultérieurement (26) un signal de confirmation au récepteur sans fil (30) via le canal de cellule secondaire si le canal de cellule secondaire est inactif, le signal de confirmation alertant le récepteur sans fil (30) au lancement de transmissions de données valides depuis l'émetteur sans fil (20) via le canal de cellule secondaire.

8. Émetteur sans fil (20) selon la revendication 7 comprenant en outre une mémoire et un circuit de traitement couplé opérationnellement à la mémoire, le circuit de traitement configuré pour déterminer si le canal de cellule secondaire est inactif selon des instructions stockées dans la mémoire.

9. Procédé (200), implémenté dans un récepteur sans fil (30) associé à des communications sans fil à accès assisté par licence entre un émetteur sans fil (20) et le récepteur sans fil (30), où les communications sans fil à accès assisté par licence comprennent des communications en utilisant à la fois un spectre sans fil sous licence associé à une cellule primaire et un spectre sans fil sans licence associé à une cellule secondaire, le procédé comprenant :
la réception (210) d'une sous-trame depuis l'émetteur sans fil (20) via un canal de cellule secondaire, le canal de cellule secondaire étant associé au spectre sans fil sans licence de la cellule secondaire ;
le fait de déterminer (220) si un signal de confirmation est présent dans la sous-trame ; et
si le signal de confirmation est présent, le décodage (230) des informations dans la sous-trame.

10. Procédé selon la revendication 9 dans lequel l'émetteur sans fil (20) est disposé dans un noeud de réseau, dans lequel le récepteur sans fil (30) est disposé dans un terminal mobile, et dans lequel le canal de cellule secondaire comprend un canal de liaison descendante associé à la cellule secondaire.

11. Procédé selon la revendication 9 dans lequel l'émetteur sans fil (20) est disposé dans un terminal mobile, dans lequel le récepteur sans fil (30) est disposé dans un noeud de réseau, et dans lequel le canal de cellule secondaire comprend un canal de liaison montante associé à la cellule secondaire.

12. Récepteur sans fil (30) associé à des communications sans fil à accès assisté par licence entre un émetteur sans fil (20) et le récepteur sans fil (30), où les communications sans fil à accès assisté par licence comprennent des communications en utilisant à la fois un spectre sans fil sous licence associé à une cellule primaire et un spectre sans fil sans licence associé à une cellule secondaire, le récepteur sans fil (30) étant configuré pour :
recevoir (35) une sous-trame depuis l'émetteur sans fil (20) via un canal de cellule secondaire, le canal de cellule secondaire étant associé au spectre sans fil sans licence de la cellule secondaire ; et
déterminer (36) si un signal de confirmation est présent dans la sous-trame ; et
si le signal de confirmation est présent, décoder (37) les informations dans la sous-trame.

13. Récepteur sans fil (30) selon la revendication 12 comprenant en outre une mémoire et un circuit de traitement couplé opérationnellement à la mémoire, le circuit de traitement configuré pour déterminer si le signal de confirmation est présent et pour décoder les informations dans la sous-trame si le signal de confirmation est présent selon des instructions stockées dans la mémoire.

14. Produit programme informatique stocké dans un support non transitoire lisible par un ordinateur pour commander un émetteur sans fil (20), le produit programme informatique comprenant des instructions logicielles qui, lorsqu'elles sont exécutées sur l'émetteur sans fil (20), amènent l'émetteur sans fil (20) à :
déterminer si un canal de cellule secondaire entre l'émetteur sans fil (20) et le récepteur sans fil (30) est inactif, le canal de cellule secondaire étant associé au spectre sans fil sans licence de la cellule secondaire ; et
transmettre ultérieurement un signal de confirmation depuis l'émetteur sans fil (20) vers le récepteur sans fil (30) via le canal de cellule secondaire si le canal de cellule secondaire est inactif, le signal de confirmation alertant le récepteur sans fil (30) au lancement de transmissions de données valides depuis l'émetteur sans fil (20) via le canal de cellule secondaire.

15. Produit programme informatique stocké dans un support non transitoire lisible par un ordinateur pour commander un récepteur sans fil (30), le produit programme informatique comprenant des instructions logicielles qui, lorsqu'elles sont exécutées sur le récepteur sans fil (30), amènent le récepteur sans fil (30) à :
recevoir une sous-trame depuis l'émetteur sans fil (20) via un canal de cellule secondaire, le canal de cellule secondaire étant associé au spectre sans fil sans licence de la cellule secondaire ; et
déterminer si un signal de confirmation est présent dans la sous-trame ; et
si le signal de confirmation est présent, décoder les informations dans la sous-trame.
